# EUROPEAN PATENT APPLICATION

(11) **EP 4 772 368 A1**
(43) Date of publication of application: **08.07.2026**
(21) Application number: 24876112.4
(22) Date of filing: 25.06.2024
(51) Int. Cl.: B60K 1/02, B60K 7/00

(54) **DISTRIBUTED DRIVE SYSTEM OF VEHICLE AND DRIVE ASSEMBLY**

(30) Priority: 08.10.2023 CN 202311306273
(71) Applicant: Dongfeng Motor Group Co., Ltd, Wuhan, Hubei 430056 (CN)
(72) Inventor: LI, Manli, Wuhan, Hubei 430056 (CN); LEI, Jun, Wuhan, Hubei 430056 (CN); ZHANG, Dingjie, Wuhan, Hubei 430056 (CN); TANG, Chen, Wuhan, Hubei 430056 (CN); GUO, Zhenge, Wuhan, Hubei 430056 (CN)
(74) Representative: Valet Patent Services Limited
(86) International application number: PCT/CN2024/101336
(87) International publication number: WO 2025/077289

(57) **Abstract**

A distributed drive system (10) and a drive assembly (1) for a vehicle. The distributed drive system comprises: a first drive system (100), the first drive system (100) comprising a first drive motor (110) and a first transmission assembly (120), the first drive motor (110) driving, through the first transmission assembly (120), a first wheel (11) of the vehicle to rotate; a second drive system (200), the second drive system (200) comprising a second drive motor (210) and a second transmission assembly (220), the second drive motor (210) driving, through the second transmission assembly (220), a second wheel (12) of the vehicle to rotate. The first wheel (11) and the second wheel (12) are located on a same drive axle of the vehicle. A portion of the first transmission assembly (120) is located in a stator of the first drive motor (110) to form an output shaft (124) of the first drive motor. A portion of the second transmission assembly (220) is located in a stator of the second drive motor (210) to form an output shaft (224) of the second drive motor.

## Description

### CROSS-REFERENCE TO RELATED APPLICATION

The embodiments of the application are based on and claim the priority of the Chinese patent application No. 202311306273.4, filed on October 8, 2023. The entire contents of the Chinese patent application are incorporated herein by reference into the embodiments of the present application.

### TECHNICAL FIELD

The invention relates to the technical field of vehicle drive systems, and in particular to a distributed drive system and drive assembly for a vehicle.

### BACKGROUND

A distributed drive system refers to a drive system that different wheels are respectively driven by independent and distinct drive motors. Torques output by various drive motors of such drive system may be not coupled with one other, so that the torque output by various drive motors can be independently controlled according to driving force requirement of each wheel, and differential steering of the vehicle can also be realized by controlling different rotational speeds of the wheels. In a related distributed drive system, different wheels are driven by different in-wheel motors. Such distributed drive system has a structure that is not compact enough and requires a large space.

### SUMMARY

The invention provides a distributed drive system and a drive assembly for a vehicle, for solving a technical problem of how to make a structure of the distributed drive system more compact, thereby reducing an occupied space of the distributed drive system.

The invention provides a distributed drive system for a vehicle, the distributed drive system comprising: a first drive system, the first drive system comprising a first drive motor and a first transmission assembly, the first drive motor driving a first wheel of the vehicle to rotate through the first transmission assembly; a second drive system, the second drive system comprising a second drive motor and a second transmission assembly, the second drive motor driving a second wheel of the vehicle to rotate through the second transmission assembly; wherein the first wheel and the second wheel are located on a same drive axle of the vehicle, a portion of the first transmission assembly is located in a stator of the first drive motor to form an output shaft of the first drive motor, and a portion of the second transmission assembly is located in a stator of the second drive motor to form an output shaft of the second drive motor.

As a second aspect, the invention further provides a drive assembly for a vehicle, the drive assembly including: a range extender assembly, configured to charge a power battery of the vehicle; an in-wheel motor, configured to drive wheels of a front drive axle of the vehicle; and the distributed drive system as described above, configured to drive wheels of a rear drive axle of the vehicle.

The distributed drive system provided by the invention includes a first drive system and a second drive system. The first drive system includes a first drive motor and a first transmission assembly, and the first drive motor drives a first wheel to rotate through the first transmission assembly. The second drive system includes a second drive motor and a second transmission assembly, and the second drive motor drives a second wheel to rotate through the second transmission assembly. The first wheel and the second wheel are located on the same drive axle of the vehicle, and at the same time, a portion of the first transmission assembly is located in the stator of the first drive motor to form the output shaft of the first drive motor, and a portion of the second transmission assembly is located in the stator of the second drive motor to form the output shaft of the second drive motor. By utilizing the space inside the stator of the first drive motor and the space inside the stator of the second drive motor to accommodate a portion of the first transmission assembly and a portion of the second transmission assembly respectively, the structure of the distributed drive system is made more compact, and the axial dimension of the distributed drive system is reduced.

### BRIEF DESCRIPTION OF DRAWINGS

FIG. 1 is a schematic structural diagram of a distributed drive system for a vehicle according to an embodiment of the invention;
FIG. 2 is a schematic structural diagram of another distributed drive system for a vehicle according to an embodiment of the invention;
FIG. 3 is a schematic structural diagram of another distributed drive system for a vehicle according to an embodiment of the invention;
FIG. 4 is a schematic structural diagram of another distributed drive system for a vehicle according to an embodiment of the invention;
FIG. 5 is a schematic diagram showing a relative positional relationship of a first oil guide channel, a first oil flinging hole and a first drive motor, and a relative positional relationship of a second oil guide channel, a second oil flinging hole and a second drive motor in the distributed drive system for a vehicle according to an embodiment of the invention; and
FIG. 6 is a schematic structural diagram of a drive assembly for a vehicle according to an embodiment of the invention.

### Description of reference numerals

1, drive assembly; 10, distributed drive system; 11, first wheel; 12, second wheel; 100, first drive system; 110, first drive motor; 120, first transmission assembly; 121, first gear transmission train; 122, second gear transmission train; 123, first intermediate shaft; 124, first output shaft; 125, first gear; 126, second gear; 127, first oil guide channel; 128, first oil flinging hole; 200. first drive system; 210, first drive motor; 220, second transmission assembly; 221, third gear transmission train; 222, fourth gear transmission train; 223, second intermediate shaft; 224, second output shaft; 225, third gear; 226, fourth gear; 227, second oil guide channel; 228, second oil flinging hole; 300, connecting shaft; 310, connection structure.

### DETAILED DESCRIPTION

To make the objectives, technical solutions and advantages of the invention clearer, the invention is described in further detail below with reference to the accompanying drawings and embodiments. It should be understood that the specific embodiments described herein are only used to explain the invention, and are not intended to limit the invention.

Various specific technical features described in the specific embodiments may be combined in any suitable manner without conflict, for example, different embodiments and technical solutions may be formed by combining different specific technical features. To avoid unnecessary repetition, various possible combinations of specific technical features in the invention are not described separately.

In the following description, the terms "first/second/ ..." are only used to distinguish different objects and do not imply that the objects have the same or related relationship. It should be understood that the orientation descriptions such as "above", "below", "outer", and "inner" refer to orientations in a normal use state, and directions such as "left" and "right" refer to left and right directions shown in corresponding specific schematic diagrams, which may or may not be the left and right directions in the normal use state.

It should be noted that the terms "comprise", "include", or any other variation thereof are intended to cover a non-exclusive inclusion, such that a process, method, article, or apparatus that comprises a list of elements includes not only those elements but also other elements not expressly listed, or elements inherent to such process, method, article, or apparatus. Without further limitation, an element defined by the phrase "comprising a ..." does not preclude the presence of additional identical elements in the process, method, article, or apparatus that comprises the element. The term "connected" includes both direct connection and indirect connection unless otherwise specified.

In the following embodiments, a distributed drive system can be applied to any type of vehicle. Exemplarily, the distributed drive system can be applied to cars as well as trucks; the distributed drive system can be applied to some of drive axles of a vehicle. Exemplarily, the distributed drive system is applied to a front drive axle of a vehicle, and the distributed drive system can also be applied to a rear drive axle of a vehicle. For ease of description, a structure of the distributed drive system is exemplarily described below by taking an application of the distributed drive system to a rear drive axle of a car as an example.

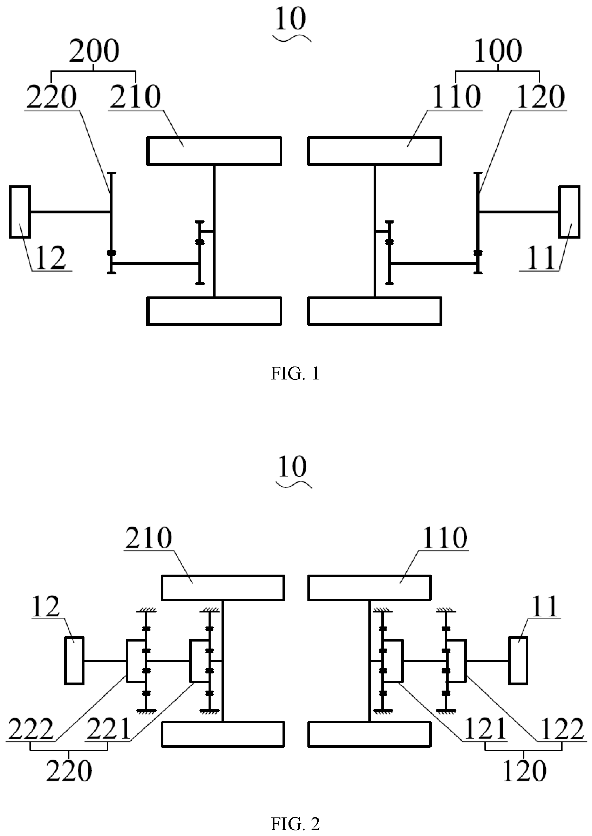

In some embodiments, as shown in FIG. 1, the distributed drive system 10 includes a first drive system 100 and a second drive system 200. The first drive system 100 includes a first drive motor 110 and a first transmission assembly 120. The first drive motor 110 drives, through the first transmission assembly 120, a second wheel 12 of the vehicle to rotate. The second drive system 200 includes a second drive motor 210 and a second transmission assembly 220. The second drive motor 210 drives, through the second transmission assembly 220, a first wheel 11 of the vehicle to rotate. The first wheel 11 and the second wheel 12 are located at a same drive axle. Exemplarily, the drive axle is a rear axle, and thus the first wheel 11 is located at a left side of the rear axle, and the second wheel 12 is located at a right side of the rear drive axle. It can be understood that the first drive motor 110 and the second drive motor 210 independently control, respectively through the first transmission assembly 120 and the second transmission assembly 220, left and right wheels of the rear drive axle, to achieve a distributed driving of the rear drive axle.

Meanwhile, a portion of the first transmission assembly 120 is located in the stator of the first drive motor 110 to form the output shaft of the first drive motor 110. It can be understood that a space inside the stator of the first drive motor 110 is used to accommodate a portion of the first transmission assembly 120, and the portion of the first transmission assembly 120 located in this space is connected to the rotor of the first drive motor 110, so that the first transmission assembly 120 can transmit a torque of the first drive motor 110 from the inside of the stator of the first drive motor 110 to the outside of the stator, that is, the portion of the first transmission assembly 120 located inside the stator of the first drive motor 110 is used as an output shaft of the first drive motor 110. A portion of the second transmission assembly 220 is located in the stator of the second drive motor 210 to form the output shaft of the second drive motor 210. It can be understood that a space inside the stator of the second drive motor 210 is used to accommodate a portion of the second transmission assembly 220, and the portion of the second transmission assembly 220 located in this space is connected to the rotor of the second drive motor 210, so that the second transmission assembly 220 can transmit a torque of the second drive motor 210 from the inside of the stator of the second drive motor 210 to the outside of the stator, that is, the portion of the second transmission assembly 220 located inside the stator of the second drive motor 210 is used as the output shaft of the second drive motor 210. In summary, by utilizing the space inside the stator of the first drive motor 110 and the space inside the stator of the second drive motor 210 to accommodate a portion of the first transmission assembly 120 and a portion of the second transmission assembly 220 respectively, a structure of the distributed drive system 10 is made more compact, and an axial dimension of the distributed drive system 10 is reduced.

An embodiment of the invention provides a distributed drive system, the distributed drive system including a first drive system and a second drive system. The first drive system includes a first drive motor and a first transmission assembly, and the first drive motor drives a first wheel to rotate through the first transmission assembly. The second drive system includes a second drive motor and a second transmission assembly, and the second drive motor drives a second wheel to rotate through the second transmission assembly. The first wheel and the second wheel are located on a same drive axle of a vehicle. Meanwhile, a portion of the first transmission assembly is located in a stator of the first drive motor to form an output shaft of the first drive motor, and a portion of the second transmission assembly is located in a stator of the second drive motor to form an output shaft of the second drive motor. By utilizing the space inside the stator of the first drive motor and the space inside the stator of the second drive motor to accommodate a portion of the first transmission assembly and a portion of the second transmission assembly, respectively, the structure of the distributed drive system is made more compact, and an axial dimension of the distributed drive system is reduced.

In some embodiments, as shown in FIG. 2, the first transmission assembly 120 includes a first gear transmission train 121 and a second gear transmission train 122. The first gear transmission train 121 is located inside the stator of the first drive motor 110, and the second gear transmission train 121 is located outside the stator of the first drive motor 110. Specifically, the first gear transmission train 121 is located within the stator spaceof the first drive motor 110 and is connected to the rotor of the first drive motor 110, thereby forming an output shaft of the first drive motor 110. Meanwhile, the second gear transmission train 122 is located outside the stator of the first drive motor 110 and is connected to the first gear transmission train 121, and the second gear transmission train 122 is connected to the first wheel 11, so that the torque of the first drive motor 110 is transmitted to the first wheel 11 through the second gear transmission train 122. It can be understood that a two-stage gear transmission system is formed by the first gear transmission train 121 and the second gear transmission train 122, and the first gear transmission train 121 is located inside the stator of the first drive motor 110, so that while the reduction ratio is increased through the two-stage gear transmission system, the structure of the first drive system 100 is made more compact, and the axial dimension of the first drive system 100 is reduced.

The second transmission assembly 220 includes a third gear transmission train 221 and a fourth gear transmission train 222. The third gear transmission train 221 is located inside the stator of the second drive motor 210, and the second gear transmission train 121 is located outside the stator of the second drive motor 210. Specifically, the third gear transmission train 221 is located within the stator space of the second drive motor 210 and is connected to the rotor of the second drive motor 210, thereby forming an output shaft of the second drive motor 210. Meanwhile, the fourth gear transmission train 222 is located outside the stator of the second drive motor 210 and is connected to the third gear transmission train 221, and the fourth gear transmission train 222 is connected to the second wheel 12, so that a torque of the second drive motor 210 is transmitted to the second wheel 12 through the fourth gear transmission train 222. It can be understood that a two-stage gear transmission system is formed by the third gear transmission train 221 and the fourth gear transmission train 222, and the third gear transmission train 221 is located inside the stator of the second drive motor 210, so that while the reduction ratio is increased through the two-stage gear transmission system, the structure of the second drive system 200 is made more compact, and the axial dimension of the second drive system 200 is reduced.

In some embodiments, as shown in FIG. 2, the first gear transmission train 121 is a first planetary gear transmission train. A sun gear of the first planetary gear transmission train (the first gear transmission train 121) is connected to the output shaft of the first drive motor 110, and a planet carrier of the first planetary gear transmission train (the first gear transmission train 121) is connected to the second gear transmission train 122, so that the torque of the first drive motor 110 can be transmitted to the second gear transmission train 122 located outside the stator of the second drive motor 110, that is, the output shaft of the first drive motor 110 is formed. It should be noted that, compared with a fixed-axis gear train, a planetary gear transmission train can have a smaller radial dimension under the premise of achieving the same transmission ratio. By configuring the first gear transmission train 121 located inside the stator of the first drive motor 110 as a planetary gear transmission train, the requirement on the radial dimension of the space inside the stator of the first drive motor 110 is reduced.

The third gear transmission train 221 is a third planetary gear transmission train. A sun gear of the third planetary gear transmission train (the third gear transmission train 221) is connected to the output shaft of the second drive motor 210, and a planet carrier of the third planetary gear transmission train (the third gear transmission train 221) is connected to the fourth gear transmission train 222, so that the torque of the second drive motor 210 can be transmitted to the fourth gear transmission train 222 located outside the stator of the second drive motor 210, that is, the output shaft of the second drive motor 210 is formed. It should be noted that, compared with a fixed-axis gear train, a planetary gear transmission train can have a smaller radial dimension under the premise of achieving the same transmission ratio. By configuring the third gear transmission train 221 located inside the stator of the second drive motor 210 as a planetary gear transmission train, the requirement on the radial dimension of the space inside the stator of the second drive motor 210 is reduced.

In some embodiments, as shown in FIG. 2, the second gear transmission train 122 is a second planetary gear transmission train. The planet carrier of the first planetary gear transmission train (the first gear transmission train 121) is connected to the second planetary gear transmission train (the second gear transmission train 122), and the second planetary gear transmission train (the second gear transmission train 122) is connected to the first wheel 11. That is, by configuring both the first gear transmission train 121 and the second gear transmission train 122 as planetary gear transmission trains, while a larger transmission ratio is achieved through two-stage gear transmission, a radial dimension of the first transmission assembly 120 is further reduced. Optionally, the sun gear of the first planetary gear transmission train (the first gear transmission train 121) and the sun gear of the second planetary gear transmission train (the second gear transmission train 122) are coaxial, thereby further reducing the radial dimension of the first transmission assembly 120.

The fourth gear transmission train 222 is a fourth planetary gear transmission train. The planet carrier of the third planetary gear transmission train (the third gear transmission train 221) is connected to the fourth planetary gear transmission train (the fourth gear transmission train 222), and the fourth planetary gear transmission train (the fourth gear transmission train 222) is connected to the second wheel 12. That is, by configuring both the third gear transmission train 221 and the fourth gear transmission train 222 as planetary gear transmission trains, while a larger transmission ratio is achieved through two-stage gear transmission, the radial dimension of the second transmission assembly 220 is further reduced. Optionally, the sun gear of the third planetary gear transmission train (the third gear transmission train 221) and the sun gear of the fourth planetary gear transmission train (the fourth gear transmission train 222) are coaxial, thereby further reducing the radial dimension of the second transmission assembly 220.

Optionally, a connection structure between the first planetary gear transmission train (the first gear transmission train 121) and the second planetary gear transmission train (the second gear transmission train 122) may be any structure that can realize two-stage gear transmission. A connection structure between the third planetary gear transmission train (the third gear transmission train 221) and the fourth planetary gear transmission train (the fourth gear transmission train 222) may be any structure that can realize two-stage gear transmission.

Optionally, as shown in FIG. 2, the planet carrier of the first planetary gear transmission train (the first gear transmission train 121) is connected to the sun gear of the second planetary gear transmission train (the second gear transmission train 122), and the planet carrier of the second planetary gear transmission train (the second gear transmission train 122) is connected to the first wheel 11. The planet carrier of the third planetary gear transmission train (the third gear transmission train 221) is connected to the sun gear of the fourth planetary gear transmission train (the fourth gear transmission train 222), and the planet carrier of the fourth planetary gear transmission train (the fourth gear transmission train 222) is connected to the second wheel 12.

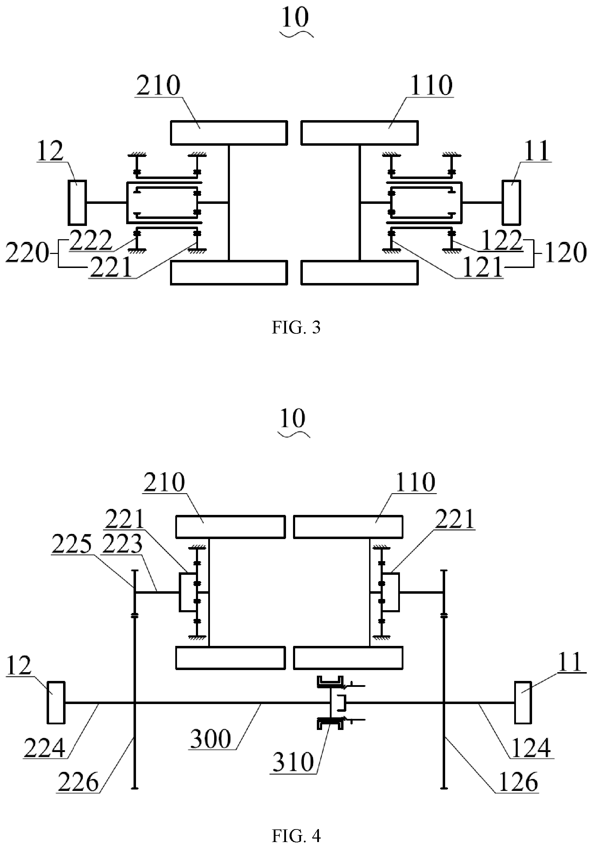

Optionally, as shown in FIG. 3, the planet gears of the first planetary gear transmission train (the first gear transmission train 121) are fixedly connected to the planet gears of the second planetary gear transmission train (the second gear transmission train 122), the planet carrier of the first planetary gear transmission train (the first gear transmission train 121) is fixedly connected to the planet carrier of the second planetary gear transmission train (the second gear transmission train 122), and the planet carrier of the second planetary gear transmission train (the second gear transmission train 122) is connected to the first wheel 11. It can be understood that the planet gears of the first planetary gear transmission train (the first gear transmission train 121) and the planet gears of the second planetary gear transmission train (the second gear transmission train 122) are fixedly connected to form a dual planetary gear, and at the same time, the planet carrier of the first planetary gear transmission train (the first gear transmission train 121) and the second planetary gear transmission train (the second gear transmission train 122) are fixedly connected to form an integrated planet carrier, and thus a larger transmission ratio can be achieved without providing the sun gear of the second planetary gear transmission train (the second gear transmission train 122).

The planet gears of the third planetary gear transmission train (the third gear transmission train 221) are fixedly connected to the planet gears of the fourth planetary gear transmission train (the fourth gear transmission train 222), the planet carrier of the third planetary gear transmission train (the third gear transmission train 221) is fixedly connected to the planet carrier of the fourth planetary gear transmission train (the fourth gear transmission train 222), and the planet carrier of the fourth planetary gear transmission train (the fourth gear transmission train 222) is connected to the second wheel 12. It can be understood that the planet gears of the third planetary gear transmission train (the third gear transmission train 221) and the planet gears of the fourth planetary gear transmission train (the fourth gear transmission train 222) are fixedly connected to form a dual planetary gear, and at the same time, the planet carrier of the third planetary gear transmission train (the third gear transmission train 221) and the fourth planetary gear transmission train (the fourth gear transmission train 222) are fixedly connected to form an integrated planet carrier, and thus a larger transmission ratio can be achieved without providing the sun gear of the fourth planetary gear transmission train (the fourth gear transmission train 222).

In some embodiments, as shown in FIG. 4, the second gear transmission train 122 includes a first intermediate shaft 123 and a first output shaft 124. A first gear 125 is fixed on the first intermediate shaft 123, and a second gear 126 is fixed on the first output shaft 124. The first intermediate shaft 123 is connected to the first gear transmission train 121. The first gear 125 meshes with the second gear 126. The first output shaft 124 is connected to the first wheel 11. It can be understood that the second gear transmission train 122 forms a fixed axis gear transmission system, which has a simple structure and can bear a larger axle load, thereby while improving a load bearing capacity of the first transmission assembly 120, reducing a manufacturing cost of the first transmission assembly 120.

The fourth gear transmission train 222 includes a second intermediate shaft 223 and a second output shaft 224. A third gear 225 is fixed on the second intermediate shaft 223, and a fourth gear 226 is fixed on the second output shaft 224. The second intermediate shaft 223 is connected to the third gear transmission train 221. The third gear 225 meshes with the fourth gear 226 mesh. The second output shaft 224 is connected to the second wheel 12. It can be understood that the fourth gear transmission train 222 forms a fixed axis gear transmission system, which has a simple structure and can bear a larger axle load, thereby while improving a load bearing capacity of the second transmission assembly 220, reducing a manufacturing cost of the second transmission assembly 220.

In some embodiments, as shown in FIG. 4, the first output shaft 124 and the second output shaft 224 are collinear. The distributed drive system 10 further includes a connecting shaft 300, and the connecting shaft 300 connects the first output shaft 124 and the second output shaft 224. At the same time, the connecting shaft 300 is provided with a connection structure 310, and the connecting shaft 300 is provided with a connection structure 310 capable of switching between a first state and a second state. When the connection structure is in the first state, a torque cannot be transmitted between the first drive system 100 and the second drive system 200 through the connecting shaft 300. When the connection structure 310 is in the second state, torque can be transmitted between the first drive system 100 and the second drive system 200 through the connecting shaft 300. It can be understood that, by connecting the first drive system 100 and the second drive system 200 through the connecting shaft 300, during a normal driving of the vehicle, the connection structure 310 is in the first state, and torque cannot be transmitted between the first drive system 100 and the second drive system 200 through the connecting shaft 300, that is, the torques of the first drive system 100 and the second drive system 200 are in a decoupled state, thereby achieving distributed driving of the vehicle. When a vehicle cannot travel due to one of the first wheel and the second wheel of the vehicle in a slipping state, the connection structure 310 is switched to be the second state. At this time, torque can be transmitted between the first drive system 100 and the second drive system 200 through the connecting shaft 300, that is, the torques of the first drive system 100 and the second drive system 200 are coupled, so that the torques output by the first drive motor 110 and the second drive motor 210 can be coupled and then transmitted to the first wheel 11 and the second wheel 12, thereby improving an ability of the vehicle to get out of trouble. In a condition that one of the first drive motor 110 and the second drive motor 210 of the vehicle fails and cannot operate, the connection structure 310 is switched to be the second state. At this time, the normally operating drive motor can transmit torque to the failed drive system through the connecting shaft 300, to drive the first wheel 11 and the second wheel 12 to rotate at the same time. Meanwhile, the vehicle alarms to notify the driver of the drive motor failure and the speed of the vehicle can be limited, that is, a limp-home function of the vehicle can be realized. Optionally, the connecting shaft 300 may be connected to different portions of the first drive system 100 and the second drive system 200, so that a torque can be transmitted between the first drive system 100 and the second drive system 200.

It should be noted that the connection structure 310 can be any structure capable of realizing and interrupting the power transmission between the first drive system 100 and the second drive system 200. Exemplarily, the connection structure 310 is a clutch. In a condition that the clutch is disengaged, the connection structure 310 is in the first state, and the torque cannot be transmitted between the first drive system 100 and the second drive system 200 through the connecting shaft 300. When the clutch is in an engaged state, the connection structure 310 is in the second state, and torque can be transmitted between the first drive system 100 and the second drive system 200 through the connecting shaft 300. Exemplarily, the connection structure 310 is a coupling sleeve. In a condition that the coupling sleeve is disengaged, the coupling sleeve idles, and thus the connection structure 310 is in the first state, and a torque cannot be transmitted between the first drive system 100 and the second drive system 200 through the connecting shaft 300. In a condition that the coupling sleeve is engaged, the coupling sleeve can drive the connecting shaft 300 to rotate, and thus the connection structure 310 is in the second state, and torque can be transmitted between the first drive system 100 and the second drive system 200 through the connecting shaft 300.

In some embodiments, as shown in FIG. 1, the output shaft of the first drive motor 110 and the output shaft of the second drive motor 210 are collinear. It can be understood that a rotation axis of the portion of the first transmission assembly 120 located inside the stator of the first drive motor 110 is collinear with a rotation axis of the portion of the second transmission assembly 220 located inside the stator of the second drive motor 210, thereby further reducing an overall radial dimension of the distributed drive system 10.

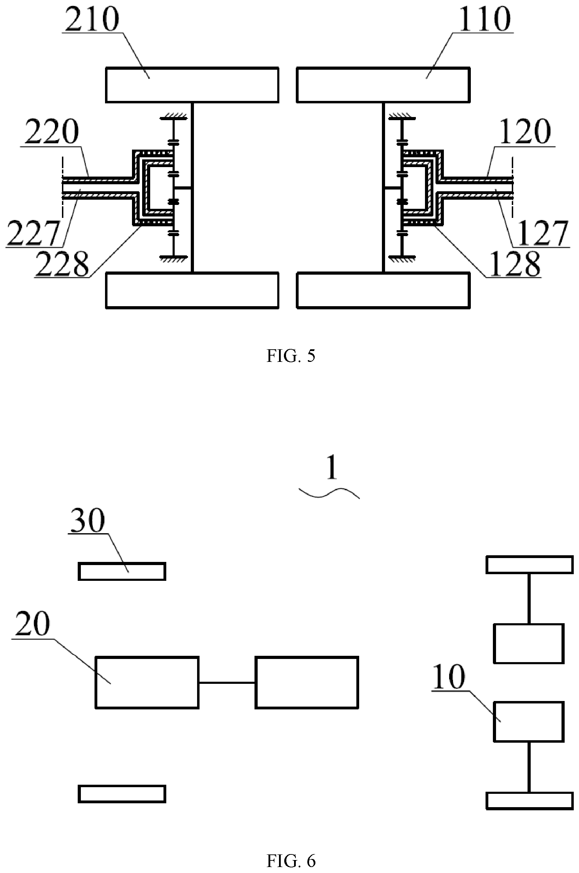

In some embodiments, as shown in FIG. 5, the first transmission assembly 120 is further provided with a first oil guide channel 127. The first oil guide channel 127 can guide an engine oil into the portion of the first transmission assembly 120 located inside the stator of the first drive motor 110. Moreover, the portion of the first transmission assembly 120 located inside the stator of the first drive motor 110 is provided with a first oil flinging hole 128, and the first oil flinging hole 128 is in communication with the first oil guide channel 127. The engine oil is guided into the portion of the first transmission assembly 120 located inside the stator of the first drive motor 110 through the first oil guide channel 127, and the engine oil is splashed to an inner wall of the stator of the first drive motor 110 by the centrifugal force generated by the rotation of the portion of the first transmission assembly 120 located inside the stator of the first drive motor 110 , so as to realize a cooling of the stator of the first drive motor 110.

The second transmission assembly 220 is further provided with a second oil guide channel 227. The second oil guide channel 227 can guide an engine oil into the portion of the second transmission assembly 220 located inside the stator of the second drive motor 210. Moreover, the portion of the second transmission assembly 220 located inside the stator of the second drive motor 210 is provided with a second oil flinging hole 228, and the second oil flinging hole 228 is in communication with the second oil guide channel 227. The engine oil is guided into the portion of the second transmission assembly 220 located inside the stator of the second drive motor 210 through the second oil guide channel 227, and the engine oil is splashed to the inner wall of the stator of the second drive motor 210 by the centrifugal force generated by the rotation of the portion of the second transmission assembly 220 located inside the stator of the second drive motor 210, so as to realize the cooling of the stator of the second drive motor 210.

In some embodiments, as shown in FIG. 6, the drive assembly 1 includes a range extender assembly 20, an in-wheel motor 21, and the distributed drive system 10. The range extender assembly 20 is an assembly in which a generator can be driven to generate electricity through the operation of an engine, and is configured to charge a power battery of the vehicle. The in-wheel motor 21 is configured to obtain electric energy from the power battery and drive wheels of a front drive axle of the vehicle. The distributed drive system 10 has a structure as shown in any one of FIG. 1 to FIG. 5, and is configured to drive wheels of a rear drive axle of the vehicle. It can be understood that the front drive axle of the vehicle is driven by the in-wheel motor 21, which provides an installation space for the range extender assembly 20 disposed in a front cabin of the vehicle. Meanwhile, the arrangement of the range extender assembly 20 can also provide electric energy for the vehicle and extend a driving range of the vehicle.

The above are only preferred embodiments of the invention, and are not intended to limit the protection scope of the invention.

## Claims

1. A distributed drive system for a vehicle, **characterized by** comprising:
a first drive system comprising a first drive motor and a first transmission assembly, the first drive motor driving, through the first transmission assembly, a first wheel of the vehicle to rotate; and
a second drive system comprising a second drive motor and a second transmission assembly, the second drive motor driving, through the second transmission assembly, a second wheel of the vehicle to rotate;
wherein the first wheel and the second wheel are located on a same drive axle of the vehicle, a portion of first transmission assembly being located in a stator of the first drive motor to form an output shaft of the first drive motor, a portion of second transmission assembly being located in a stator of the second drive motor to form an output shaft of the second drive motor.

2. The distributed drive system according to claim 1, wherein the first transmission assembly comprises a first gear transmission train and a second gear transmission train, the first gear transmission train being located inside the stator of the first drive motor, the second gear transmission train being located outside the stator, the first gear transmission train being connected to the second gear transmission train, the second gear transmission train being connected to the first wheel;
the second transmission assembly comprises a third gear transmission train and a fourth gear transmission train, the third gear transmission train being located inside the stator of the second drive motor, the fourth gear transmission train being located outside the stator, the third gear transmission train being connected to the fourth gear transmission train, the fourth gear transmission train being connected to the second wheel.

3. The distributed drive system according to claim 2, wherein the first gear transmission train is a first planetary gear transmission train, a sun gear of the first planetary gear transmission train being connected to the first drive motor, a planet carrier of the first planetary gear transmission train being connected to the second gear transmission train;
the third gear transmission train is a third planetary gear transmission train, a sun gear of the third planetary gear transmission train being connected to the second drive motor, a planet carrier of the second planetary gear transmission train being connected to the fourth gear transmission train.

4. The distributed drive system according to claim 3, wherein the second gear transmission train is a second planetary gear transmission train, a planet carrier of the first planetary gear transmission train being connected to the second planetary gear transmission train;
the fourth gear transmission train is a fourth planetary gear transmission train, a planet carrier of the third planetary gear transmission train being connected to the fourth planetary gear transmission train.

5. The distributed drive system according to claim 4, wherein a planet gear of the first planetary gear transmission train is fixedly connected to a planet gear of the second planetary gear transmission train, the planet carrier of the first planetary gear transmission train being connected to a planet carrier of the second planetary gear transmission train, the planet carrier of the second planetary gear transmission train being connected to the first wheel.

6. The distributed drive system according to claim 2, wherein the second gear transmission train comprises a first intermediate shaft and a first output shaft, a first gear being fixed on the first intermediate shaft, a second gear being fixed on the first output shaft, the first intermediate shaft being connected to the first gear transmission train, the first gear meshing with the second gear, the first output shaft being connected to the first wheel;
the fourth gear transmission train comprises a second intermediate shaft and a second output shaft, a third gear being fixed on the second intermediate shaft, a fourth gear being fixed on the second output shaft, the second intermediate shaft being connected to the third gear transmission train, the third gear meshing with the fourth gear, the second output shaft being connected to the second wheel.

7. The distributed drive system according to claim 6, wherein the first output shaft and the second output shaft are collinear; the distributed drive system further comprises a connecting shaft, the connecting shaft connecting the first output shaft and the second output shaft;
the connecting shaft is provided with a connection structure, the connection structure being capable of switching between a first state and a second state, and wherein when the connection structure is in the first state, a torque cannot be transmitted between the first output shaft and the second output shaft through the connecting shaft, and wherein when the connection structure is in the second state, the torque can be transmitted between the first output shaft and the second output shaft through the connecting shaft.

8. The distributed drive system according to claim 1, wherein the output shaft of the first drive motor and the output shaft of the second drive motor are collinear.

9. The distributed drive system according to any one of claims 1 to 8, wherein the first transmission assembly is further provided with a first oil guide channel for guiding an engine oil into a portion of the first transmission assembly located inside the stator of the first drive motor, the portion of the first transmission assembly located inside the stator of the first drive motor being provided with a first oil flinging hole, the first oil flinging hole being in communication with the first oil guide channel;
the second transmission assembly is further provided with a second oil guide channel for guiding an engine oil into a portion of the second transmission assembly located inside the stator of the second drive motor, the portion of the second transmission assembly located inside the stator of the second drive motor being provided with a second oil flinging hole, the second oil flinging hole being in communication with the second oil guide channel.

10. A drive assembly for a vehicle, **characterized by** comprising:
a range extender assembly configured to charge a power battery of the vehicle;
an in-wheel motor configured to drive wheels of a front drive axle of the vehicle;
the distributed drive system according to any one of claims 1 to 9, configured to drive wheels of a rear drive axle of the vehicle.
